# EUROPEAN PATENT APPLICATION

(11) **EP 1 611 945 A1**
(43) Date of publication of application: **04.01.2006**
(21) Application number: 04015139.1
(22) Date of filing: 28.06.2004
(51) Int. Cl.: B01J 8/02

(54) **Method for controlling the temperature in exothermic catalytic reactions**

(71) Applicant: METHANOL CASALE S.A., 6900 Lugano-Besso (CH)
(72) Inventor: Filippi, Ermanno, 6976 Castagnola (CH); Rizzi, Enrico, 22070 Grandate (CO) (IT); Tarozzo, Mirco, 6853 Ligornetto (CH)
(74) Representative: Zardi, Marco

(57) **Abstract**

A method for controlling the temperature of an exothermic reaction and the simultaneous production of steam is based upon the use of heat exchangers (5a) crossed by boiling water along an internal path, extending between an inlet opening (5h) for boiling water and an outlet opening (5f).

## Description

### Field of application

The present invention, in its most general aspect, refers to a method for carrying out exothermic chemical reactions in pseudo-isothermal conditions, in other words in conditions such that the reaction temperature is controlled within a limited range of values around a predetermined optimal value.

In particular, this invention concerns a method for controlling the temperature of a reaction of the aforementioned type, based upon the use of tube bundle or plate-shaped heat exchangers, embedded in a catalytic bed in which said reaction takes place.

Even more specifically, this invention refers to a method of the type considered above, for controlling the temperature of an exothermic reaction and the simultaneous production of steam.

### Prior Art

It is known that to control the temperature of a catalytic reaction that is wished to be carried out in pseudo-isothermal conditions, in most cases one uses a heat exchange between a predetermined operating fluid, which runs inside appropriate heat exchangers, and the catalytic bed in which said exchangers are embedded and in which the aforementioned reaction takes place.

It is also known, in the case of exothermic or highly exothermic reactions, to generally use water as operating fluid to obtain, with the aforementioned heat exchange, a substantial production of steam as well as for the desired control of the reaction temperature. In particular, in this case, the heat exchange operating fluid is boiling water.

The boiling water, crossing the heat exchangers, absorbs a certain amount of heat, generating steam. At the outlet from the heat exchangers, this steam is separated from the boiling water, recovered and used in a variety of services of the plant in which the exothermic reaction under consideration is active.

The boiling water, on the other hand, is recycled to the heat exchangers to carry out its heat exchange operating fluid function.

This technique, although advantageous and widely applied in the field, has a recognized drawback due precisely to the fact that the temperature of the operating fluid entering into the heat exchangers is the boiling temperature of water. For this reason the possibility of controlling the reaction temperature is very limited, the minimum attainable value of which is in any case higher than the boiling temperature of water.

### Summary of the invention

The technical problem underlying the present invention is that of providing a method for controlling the temperature of an exothermic reaction and the simultaneous production of steam, which allows the quoted drawbacks with reference to the prior art to be overcome.

Such a technical problem is solved, according to the invention, by a method of the aforementioned type, based upon the use of heat exchangers crossed by boiling water along an internal path, extending between an inlet opening for boiling water and an outlet opening, characterized in that a further flow of water having, at the inlet of said exchanger, a lower temperature than the temperature of said boiling water is fed into at least one of said exchangers.

Advantageously, said further flow of water is fed into said at least one exchanger in at least one position thereof upstream of said inlet opening for boiling water, with reference to said internal path.

The advantages and the characteristics of the invention shall become clearer from the description of an embodiment of a method according to the finding, made hereafter with reference to the attached drawings, only given for indicating and not limiting purposes.

### Brief description of the drawings

Figure 1 shows a schematic section view of a reactor for carrying out the invention.
Figure 2 shows a schematic cross section of the reactor of figure 1.

### Detailed description of a preferred embodiment of the invention

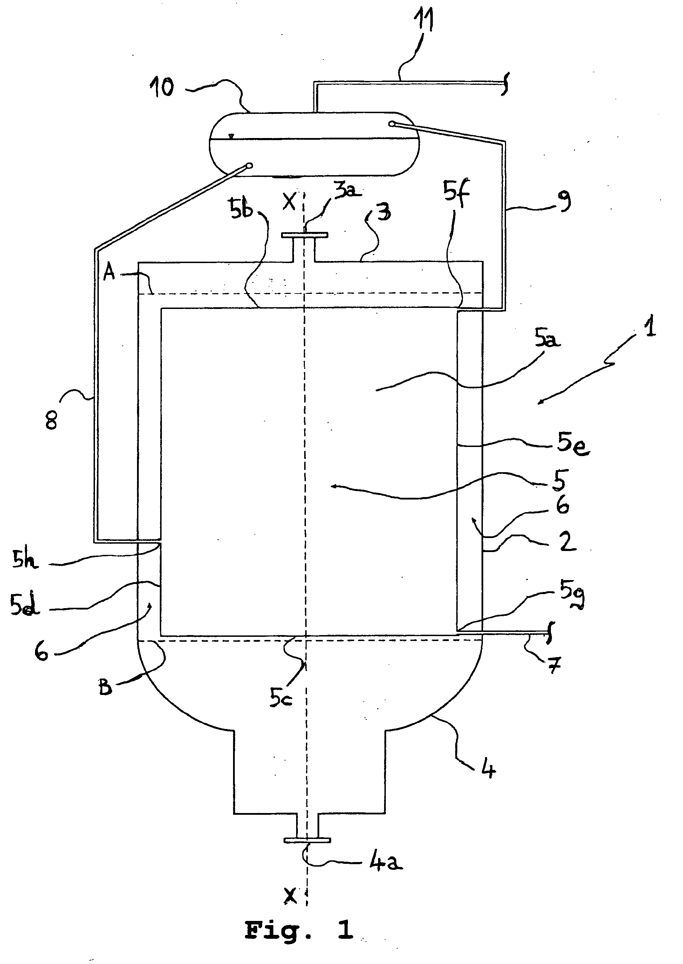

With reference to figure 1, a reactor for carrying out the method according to the present invention is globally indicated with 1.

Such a reactor 1 comprises a cylindrical shell 2, having a vertical axis X-X, an upper bottom 3, equipped with an inlet opening 3a for reactants, and a lower bottom 4 equipped with an outlet opening 4a for products.

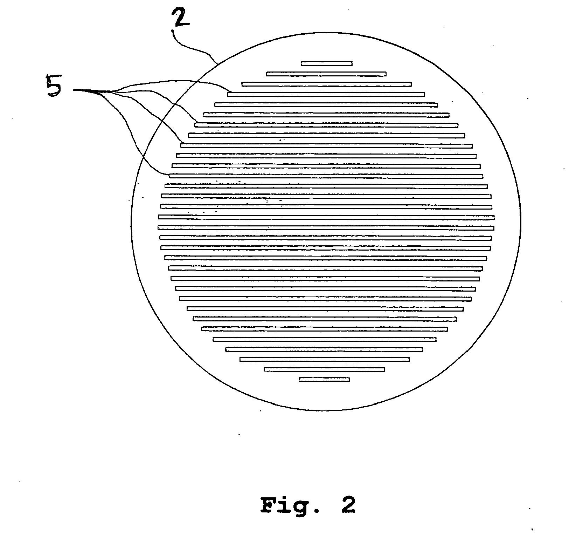

Inside such a reactor 1, between the horizontal planes marked as A and B in figure 1, a plurality of plate-shaped heat exchangers 5 is positioned, arranged on planes parallel to each other and parallel to the axis X-X of the cylindrical shell 2 (this is how it is in the example of figure 2; a frequent alternative is that in which the plate-shaped exchangers are arranged radially), embedded in a catalytic bed 6, supported in a per se known way and therefore not represented. Such exchangers have a flattened parallelepiped configuration and comprise a couple of large walls preferably consisting of metallic, substantially flat, juxtaposed, perimetrically joined plates, defining a chamber inside them for the passage of an appropriate heat exchange operating fluid and in communication with the outside thanks to suitable supply and discharge connections.

In each plate-shaped exchanger 5a of the plurality of exchangers 5 an upper short side 5b, a lower short side 5c and two long vertical sides 5d and 5e are defined.

The plurality of heat exchangers 5 is in fluid communication with the outside thanks to a supply duct 7, a recycling duct 8 and a discharge duct 9.

The supply duct 7 is in fluid communication with each heat exchanger 5a through a connection 5g placed on the vertical long side 5e close to the lower short side 5c whereas the discharge duct 9 is in fluid communication with each heat exchanger 5a through a connection 5f placed on the vertical long side 5e close to the upper short side 5b.

The recycling duct 8, on the other hand, is in communication with each heat exchanger 5a through a suitable connection 5h placed on the vertical long side 5d at predetermined distance from the lower short side 5c.

Through the recycling duct 8 and the discharge duct 9, the plurality of heat exchangers 5 is in communication with a steam drum 10, outside the reactor.

According to the method of the present invention, a flow of reactants is fed into the reactor 1 through the inlet opening 3a and flows towards the outlet opening 4a parallelly to the axis X-X, crossing the catalytic bed 6 where it reacts exothermically to give the reaction products. Such reaction products (which may, for example, be ammonia or methanol), coming out from the catalytic bed 6, pass into the lower bottom 4, from which they are discharged through the outlet opening 4a.

A flow of boiling water, coming from the steam drum 10 and fed to the reactor 1 through the duct 8, crosses the plurality of heat exchangers 5, along an internal path, extending between an inlet opening corresponding to the connection 5h and an outlet opening corresponding to the connection 5f. In the non-limiting example illustrated in figure 1, the boiling water flows in counter current with respect to the flow of reactants inside the catalytic bed 6.

Moreover, through the supply duct 7 and through the connections 5g, a further flow of water at a lower temperature than that of the aforementioned boiling water is injected inside the plurality of heat exchangers 5 and upstream of the connection 5h with respect to said internal path.

The further flow of water and the flow of boiling water then mix inside the heat exchangers 5a.

The water that flows inside the heat exchangers 5a absorbs, through the walls of such exchangers, the reaction heat developed by the exothermic reaction in the catalytic bed 6 and it is subject to a partial phase change, giving rise to the generation of steam.

At the outlet from the heat exchangers 5a, a flow of boiling water and steam is sent, through the discharge duct 9, to the steam drum 10, where boiling water and steam are separated. The boiling water is recycled to the reactor 1 thanks to the recycling duct 8, whereas the steam is taken away through a steam discharge duct 11.

With the method of the present invention it is possible to reach, inside the heat exchangers 5a, a minimum temperature of the heat exchange operating fluid that is lower than the boiling temperature of water, in particular in the zone between the connections 5g and 5h, i.e. in the zone between the supply of water at a temperature lower than boiling temperature and the supply of boiling water, respectively.

By doing so, the lower part of the reactor operates at a lower temperature than boiling temperature, said temperature also being variable as required; the upper part of the reactor, on the other hand, operates at a temperature higher than boiling temperature.

It is thus possible, with the method of the present invention, to solve the problems of the prior art as quoted above.

The main advantage resulting from the present invention is given by the possibility of cooling the catalytic bed 6 more at the lower bottom 4, i.e. at the last part of catalytic bed crossed by the reactants; such cooling allows the conversion yields to be improved for equilibrium-limited reactions, like for example ammonia or methanol synthesis reactions.

A further advantage of the method according to the invention is that, in the case in which the circulation of the water from the steam drum takes place by natural circulation, the injection of the further flow of water in the lower part of the plate-shaped exchanger at a certain speed that is, at the entry of the flow of water coming from the steam drum, higher than that of the flow of water itself, eases the establishment of the natural convection in the correct direction.

Of course, the man skilled in the art can bring numerous modifications and variants to the method for controlling the temperature of exothermic catalytic reactions described above in order to satisfy specific and contingent requirements, all of these modifications and variants in any case being covered by the scope of protection of the invention, as defined by the following claims.

## Claims

1. Method for controlling the temperature of an exothermic reaction and the simultaneous production of steam based upon the use of heat exchangers (5a) crossed by boiling water along an internal path, extending between an inlet opening (5h) for boiling water and an outlet opening (5f), **characterized in that** a further flow of water having, at the inlet (5g) of said exchanger (5a), a lower temperature than the temperature of said boiling water is fed into at least one of said exchangers (5a).

2. Method according to claim 1, **characterized in that** said further flow of water is fed into said at least one exchanger (5a) in at least one position (5g) thereof upstream of said inlet opening (5h) for boiling water, with reference to said internal path.

3. Method according to claim 1, **characterized in that** said at least one heat exchanger (5a) is a so-called plate-shaped heat exchanger.
